# EUROPÄISCHE PATENTSCHRIFT

(11) **EP 0 772 348 B1**
(45) Veröffentlichungstag und Bekanntmachung des Hinweises auf die Patenterteilung: **29.12.2004**
(21) Anmeldenummer: 96117294.7
(22) Anmeldetag: 28.10.1996
(51) Int. Cl.: H04N 5/44, H04N 5/21

(54) **Verfahren und Schaltungsanordnung zur Rauschreduktion für Videosignale**
Method and circuit for noise reduction in video signals
Procédé et circuit de réduction de bruit pour des signaux vidéo

(30) Priorität: 02.11.1995 DE 19540901
(43) Veröffentlichungstag der Anmeldung: 07.05.1997
(73) Patentinhaber: Infineon Technologies AG, 81669 München (DE)
(72) Erfinder: Amer, Aishy, Dipl.-Inform., 44227 Dortmund (DE); Blume, Holger, Dipl.-Ing., 44793 Dortmund (DE); Jostschulte, Klaus, Dipl.-Ing., 44369 Dortmund (DE); Schröder, Hartmut, Prof. Dr., 44229 Dortmund (DE)
(74) Vertreter: Charles, Glyndwr

(56) Entgegenhaltungen:
- EP-A- 0 554 495
- DE-A- 3 910 341
- DE-C- 4 434 728
- KARLSSON M ET AL: "EVALUATION OF SCANNING RATE UP CONVERSION ALGORITHMS;SUBJECTIVE TESTING OF INTERLACED TO PROGRESSIVE CONVERSION" IEEE TRANSACTIONS ON CONSUMER ELECTRONICS, Bd. 38, Nr. 3, 1. August 1992, Seiten 162-167, XP000311831
- DREIER H J: "LINE FLICKER REDUCTION BY ADAPTIVE SIGNAL PROCESSING" SIGNAL PROCESSING OF HDTV, 2, TURIN, AUG. 30 - SEPT. 1, 1989, Nr. WORKSHOP 3, 30. August 1989, Seiten 695-701, XP000215287 CHIARIGLIONE L

## Beschreibung

Die Erfindung betrifft ein Verfahren zur Rauschreduktion in einem Videosignal. Die Erfindung betrifft außerdem eine Schaltungsanordnung zur Durchführung des Verfahrens.

Videosignale sind beim Empfang in einem Videoendgerät oftmals stark verrauscht. Rauschstörungen können bei der Filmabtastung in der Kamera oder im Filmscanner, bei der Übertragung, beispielsweise über terrestrische Rundfunksendestrecken oder Kabelanlagen, oder bei Aufzeichnung und Wiedergabe durch ein Aufzeichnungsgerät, beispielsweise durch einen Videorecorder, entstehen. Besonders bedeutsam sind gaußförmiges Rauschen und Impulsrauschen. Das vorhandene Rauschen behindert den Empfang des Nutzsignals. Im Videoempfangsgerät ist deshalb eine Rauschreduktion notwendig.

In der europäischen Offenlegungsschrift EP-A 0 344 579 wird die Rauschreduktion mittels eines rekursiven Filters durchgeführt, dessen Reduktionsparameter k bewegungsadaptiv eingestellt wird. Bei geringer Bewegung wird eine hohe Rauschreduktion eingestellt, für kleinere Änderungen zwischen einzelnen Bildbereichen wird größeres Rauschen zugelassen, indem die Rauschreduktion verringert wird. Beim Feststellen schneller Bewegung wird das Filter zurückgeschaltet, so daß keine Nachzieheffekte auftreten. Die Rauschreduktion wird auf alle spektralen Anteile des Bildes gleichermaßen angewandt.

In der europäischen Offenlegungsschrift EP-A-0 581 059 sind ein Verfahren und eine Schaltungsanordnung zur Rauschreduktion eines Videosignals beschrieben, bei dem die Rauschreduktion bewegungsadaptiv gesteuert wird. Dem Reduktionsfilter wird das Videosignal mit vollständiger Datenrate und -auflösung zugeführt. Über den Rückkopplungszweig wird nur der niederfrequente Anteil des Ausgangssignals geführt, so daß der Speicherbedarf verringert wird.

In der US-5 107 340 ist eine Schaltungsanordnung Zur Rauschreduktion eines Videosignals beschrieben, bei der das Videosignal mittels Hochpaß- und Tiefpaßfilter in einen Höhen- bzw. einen Tiefensignalanteil aufgetrennt wird. Im Höhen- und Tiefenkanal wird je eine rekursive Rauschfilterung durchgeführt. Der rückgekoppelte Höhensignalanteil wird um 2 Bildrahmen verzögert, der rückgekoppelte Tiefensignalanteil um einen Bildrahmen.

Bei diesen bekannten Schaltungsanordnungen und Verfahren wird jedoch der Bildinhalt, auf den die Rauschreduktion angewandt wird, nur ungenügend berücksichtigt. Bei hoher Rauschreduktion können trotzdem störende Nachzieheffekte oder Bewegungsverschleifung auftreten, während bei verringerter Rauschreduktion solche Störungen zwar vermieden werden, die Rauschbefreiung allerdings ungenügend ist.

Die EP 0 554 495 A1 beschreibt ein Verfahren und eine Schaltungsanordnung zur bewegungsvektorgestützten Reduktion von Flimmern bei einem Fernsehempfänger, wobei das halbbildweise empfangene Fernsehsignal durch ein räumlich wirkendes Filter in seine bezüglich der Ortsfrequenz hochfrequenten und niederfrequenten Signalanteile aufgeteilt wird, wobei diese hochfrequenten und niederfrequenten Anteile einer auf Verwendung von Bewegungsvektoren basierenden Signalverarbeitung unterzogen und anschließend wieder zusammengeführt werden. In nachteiliger Weise stellt das Verfahren der EP 0 554 495 A1 keine ausreichende Rauschreduktion bereit, da ein Bewegungsanteil in den hochfrequenten und niederfrequenten Signalanteilen nicht separat feststellbar ist, so dass ein Reduktionsparameter für eine Rauschreduktion nicht präzise erfassbar ist.

Die Aufgabe der vorliegenden Erfindung besteht daher darin, ein Verfahren und eine Schaltungsanordnung vorzusehen, mit welchen eine effiziente Rauschreduktion für ein Videosignal ermöglicht wird.

Erfindungsgemäß wird diese Aufgabe betreffend das Verfahren durch ein Verfahren gemäß den Merkmalen des Patentanspruchs 1 gelöst.

Eine Schaltungsanordnung zur Durchführung des Verfahrens ist in Patentanspruch 4 angegeben.

Beim erfindungsgemäßen Verfahren nimmt der Bildinhalt auf die Steuerung der Rauschreduktion größeren Einfluß. Durch die Höhen-/Tiefensignaltrennung wird im Höhen- bzw. Tiefenkanal eine unterschiedliche Rauschverarbeitung ermöglicht, die auf die jeweiligen Eigenschaften des Höhen- bzw. Tiefenkanals anpaßbar ist. Der Höhenkanal enthält vertikal hochfrequente Bildstrukturen, die wegen des Zeilensprungs problematisch sind. Im Höhenkanal wird deshalb vorzugsweise eine bewegungsadaptive rastergleiche rekursive Rauschreduktion durchgeführt, so daß vertikal hochfrequente Strukturen erhalten bleiben. Bedeutsam ist, daß das menschliche Auge für örtlich hochfrequentes Rauschen geringe Empfindlichkeit aufweist. Zweckmäßigerweise wird deshalb die Rauschreduktion im Höhenkanal schon bei Vorliegen von geringer Bewegung reduziert. Das verbleibende Rauschen wird durch die geringe Rauschempfindlichkeit des Auges kompensiert. Im Tiefenkanal ist eine möglichst positionsrichtige Darstellung notwendig, wobei zu berücksichtigen ist, daß das Auge für örtlich niederfrequentes Rauschen empfindlich ist. Zur positionsrichtigen Rauschreduktion werden die rückgekoppelten Eingangswerte des Rauschfilters zweckmäßigerweise über ein Medianfilter geführt.

Nachfolgend wird die Erfindung anhand der in der Zeichnung dargestellten Figuren näher erläutert. Es zeigen:
- Figur 1: ein Diagramm einer Schaltungsanordnung zur Durchführung des erfindungsgemäßen Verfahrens,
- Figur 2: ein Zugriffsschema der rekursiven Rauschfilterung im Höhenkanal,
- Figur 3: ein Zugriffsschema im Tiefenkanal,
- Figur 4: einen Bewegungsdetektor für den Höhenkanal,
- Figur 5: einen Bewegungsdetektor für den Tiefenkanal und
- Figur 6: Kennlinien für den Reduktionsfaktor k der Rauschreduktionsfilter in Abhängigkeit von der festgestellten Bewegung.

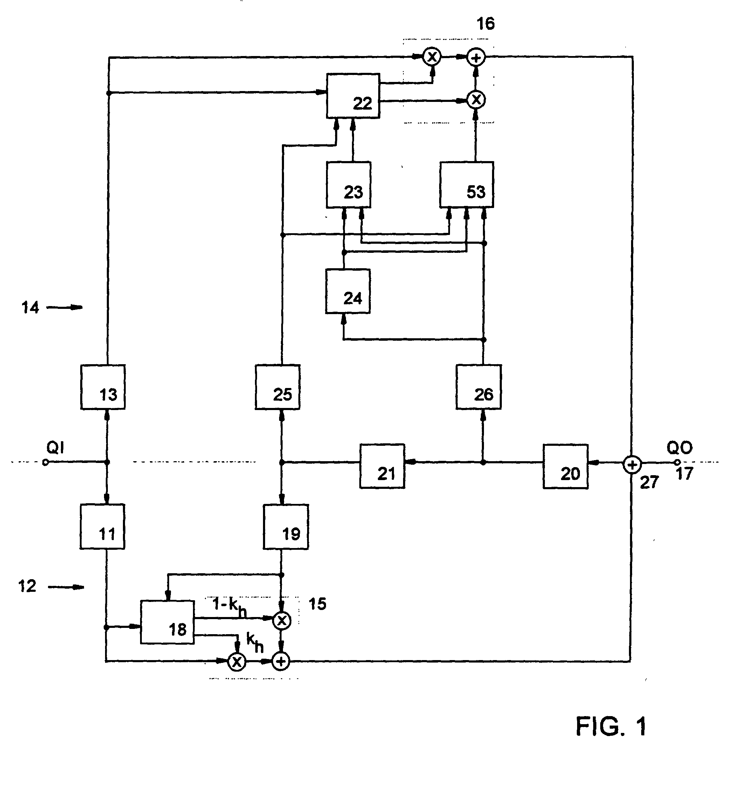

Gemäß Figur 1 wird der Schaltungsanordnung an einem Eingangsanschluß 10 das Videosignal QI zugeführt. Es enthält eine Folge A1, B1, A2, B2, ... von Halbbildern mit Zeilensprung. Dies bedeutet, daß die Halbbilder A1, A2, ... die ungeradzahligen Zeilen enthalten, die einer ersten Rasterlage angehören, und die Halbbilder B1, B2, ... die geradzahligen Zeilen, die einer zweiten Rasterlage angehören.

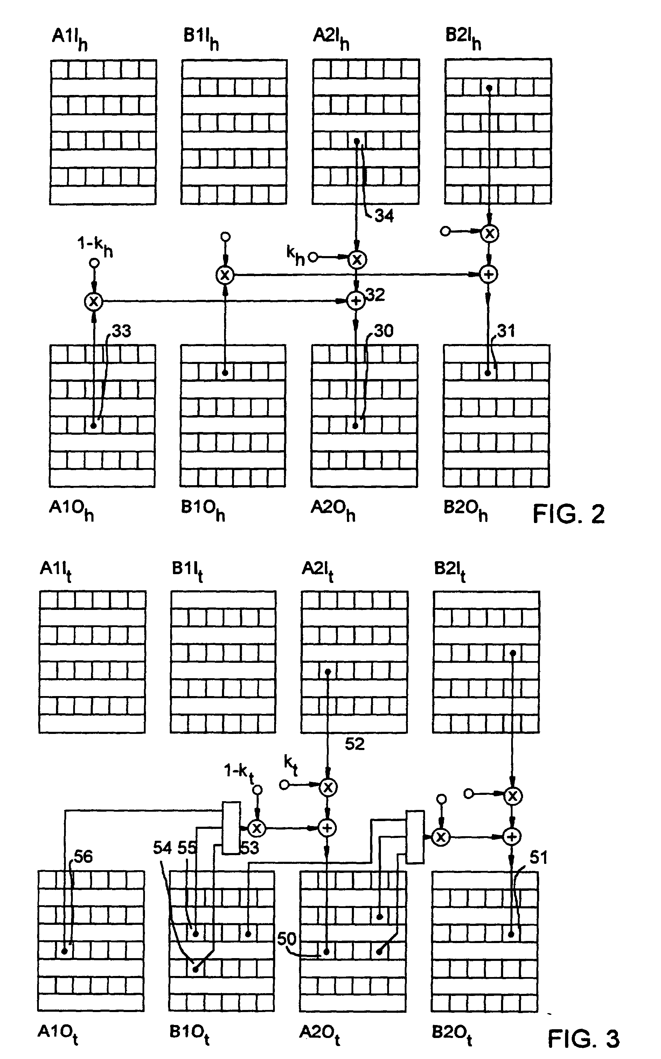

Das Videosignal wird in bezug auf die Ortsfrequenz in einen Höhensignalanteil und einen Tiefensignalanteil aufgetrennt. Hierzu sind ein Hochpaßfilter 11 vorgesehen, das für den Höhenkanal 12 den in bezug auf die Ortsfrequenz hochfrequenten Bildanteil ausfiltert, und ein Tiefpaßfilter 13, das für den Tiefenkanal 14 den niederfrequenten Signalanteil ausfiltert. Am Ausgang der Hochpaß-/Tiefpaßfilter 11 bzw. 13 liegt jeweils eine Folge von zeilenverkämmten Halbbildern A1Iₕ, B1Iₕ, A2Iₕ, B2Iₕ, ... bzw. A1Iₜ, B1Iₜ, A2Iₜ, B2Iₜ, ... gemäß Figur 2 bzw. 3 vor, die den Höhen- bzw. Tiefensignalanteil der eingangsseitigen Halbbildfolge enthalten. Gute Ergebnisse liefern cos²-förmige Filter 11, 13. Die Bandaufspaltung kann entweder zweidimensional erfolgen oder zur Verringerung des Schaltungsaufwands rein vertikal.

Im Höhen- und Tiefenkanal werden die Signalanteile durch ein jeweiliges Rauschfilter 15 bzw. 16 gefiltert und dann zum Ausgangssignal QO am Anschluß 17 additiv überlagert. Die Komponenten 15, 16 der Rauschfilter sind strukturell entsprechend aufgebaut und an sich bekannt. Im Rauschfilter 15 wird das Höhensignal aus dem Filter 11 mit einem Faktor kₕ bewertet und mit dem Höhenanteil des rückgekoppelten Ausgangssignals additiv verknüpft, der mit dem Faktor 1-kₕ bewertet wird. Die Faktoren kₕ und 1-kₕ werden von einem Bewegungsdetektor 18 gesteuert. Wenn der Faktor kₕ zunimmt, wird der Rückkoppelanteil im Rauschfilter 15 und somit die Rauschfilterwirkung verringert. Im Grenzfall kₕ = 1 ist das Rauschfilter abgeschaltet. Zur Erzeugung der rückgekoppelten Höhensignalanteils ist ein Hochpaßfilter 19 vorgesehen, dem das Ausgangssignal QO zugeführt wird. Wie später noch zu erläutern ist, ist es im Höhenkanal 12 zweckmäßig, daß die Eingangsbildpunkte des Rauschfilters 15 aus rastergleichen Halbbildern entnommen werden. Das Ausgangssignal QO wird deshalb um die Periode von zwei Halbbildern verzögert. Dies ist durch zwei Halbbildspeicher 20, 21 durch deren symbolische Reihenschaltung angegeben.

In Figur 2 ist das Zugriffsschema des Rauschfilters 15 im Höhenkanal 12 gezeigt, und zwar für die Erzeugung eines Bildpunkts 30, der dem Halbbild A2Oₕ der ersten Rasterlage angehört, und zur Erzeugung eines Bildpunkts 31, der dem Halbbild B2Oₕ der zweiten Rasterlage angehört. Das Zugriffsschema läuft jeweils entsprechend ab. Zur Erzeugung des rauschgefilterten Ausgangsbildpunkts 30 wird eingangsseitig der in der Lage im Halbbild entsprechende Bildpunkt 34 des gerade eingespeisten und rastergleichen Halbbilds A2Iₕ zugeführt, wobei dieser mit dem Rekursionsfaktor kₕ multipliziert wird. Zu diesem Wert wird durch die Addition 32 der in der Lage entsprechende Bildpunkt 33 des rastergleichen vorhergehenden ausgangsseitigen Halbbilds A1Oₕ hinzuaddiert, wobei dieser mit dem Faktor 1-kₕ multipliziert wird.

Im Höhenkanal wird somit eine rastergleiche Rekursion durchgeführt. Durch die rastergleiche Rekursion zur Rauschfilterung werden vertikal hochfrequente Strukturen erhalten. Es werden nur Bildpunkte gleicher Rasterlage miteinander verknüpft.

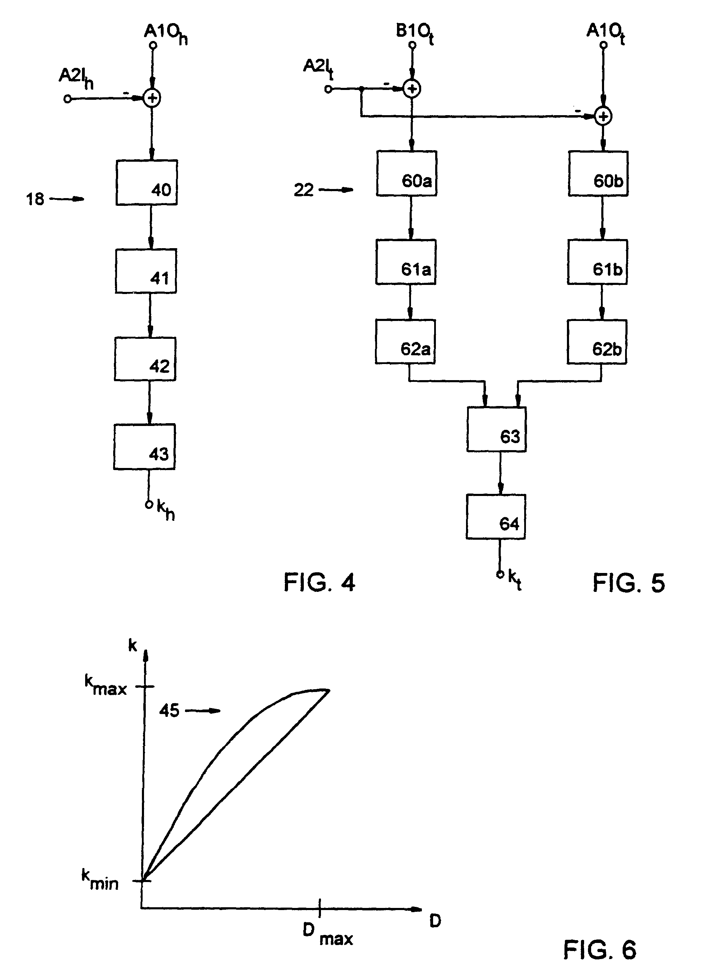

Zur bewegungsadaptiven Einstellung des Reduktionsparameters kₕ im Höhenkanal wird der in Figur 4 dargestellte Bewegungsdetektor verwendet. Bei diesem wird die Differenz aus lagemäßig entsprechenden Bildpunkten der im Rauschfilter gerade eingangsseitig verarbeiteten Halbbilder berechnet, im vorliegenden Fall die Differenz entsprechender Bildpunkte der Halbbild A2Iₕ und A1Oₕ. Anschließend wird eine Betragsbildung 40 durchgeführt und eine örtliche Tiefpaßfilterung 41, zweckmäßigerweise durch ein Mittelwertfilter. Dadurch wird erreicht, daß sich durch Bewegung ergebende Differenzwerte korreliert aufaddieren, durch Rauschstörung erzeugte Differenzwerte hingegen unkorreliert aufaddieren und somit den Bewegungsdetektor im wesentlichen nicht beeinflussen. Die Bewegungsdetektion wird dadurch rauschunempfindlicher. Anschließend im Signalpfad befindet sich ein örtliches Maximalwertfilter 42, durch das ein Maximalwert für eine Anzahl von Differenzwerten gebildet wird, die innerhalb eines vorgegebenen Bereichs liegen. Die Detektionsgebiete werden dadurch örtlich geringfügig größer ausgedehnt. Anschließend wird das gewonnene Signal in einem Block 43 mit einer Abbildungskennlinie bewertet, und der Reduktionsparameter kₕ ausgegeben.

Als Abbildungskennlinie für den Block 43 im Höhenkanal wird zweckmäßigerweise eine negativ gekrümmte Kennlinie 45 (Figur 6) verwendet. Vorzugsweise ist die Kennlinie ein quadratisch negative Kurve, beispielsweise eine Parabelkurve mit Öffnung nach unten. Dadurch wird erreicht, daß geringe Bewegungsdifferenzsignale bereits zu einer starken Erhöhung des Reduktionsparameters führen, so daß bei geringer Bewegung eine starke Verringerung der Rauschreduktion bewirkt wird. Der Verringerungsfaktor wird dadurch in bezug auf vorliegende Bewegung überproportional erhöht. Der Bewegungsdetektor arbeitet somit relativ empfindlich, so daß bereits kleine Bewegungen sicher erkannt werden, aber auch Rauschstörungen ebenfalls als Bewegung detektiert werden. Die Rauschreduktion im Höhenkanal fällt dadurch geringer aus. Durch die geringe Rauschempfindlichkeit des Auges für örtliche Höhensignale wird aber die verringerte Rauschreduktion kompensiert.

Im Tiefenkanal 14 wird die Rauschreduktion derart durchgeführt, daß eine möglichst positionsrichtige Darstellung bewegter Objekte im Bildinhalt gewährleistet ist. In Figur 3 ist das Zugriffsschema für den Tiefenkanal anhand eines in einem Halbbild A2Oₜ der ersten Rasterlage liegenden Bildpunkts 50 und anhand eines in einem Halbbild B2Oₜ der zweiten Rasterlage liegenden Bildpunkts 51 angegeben. Zur Erzeugung des Bildpunkts 50 wird dem Rekursionsfilter eingangseitig der an entsprechender Bildpunktstelle liegende Bildpunkt 52 des gerade empfangenen Halbbilds A2Iₜ der gleichen Rasterlage des Tiefenkanals zugeführt. Dieser Bildpunkt wird mit dem Reduktionsparameter kₜ bewertet. Additiv wird ein aus mehreren Ausgangsbildpunktwerten ermittelter Wert im Rückkopplungspfad überlagert, wobei dieser mit dem Faktor 1-kₜ bewertet wird. Um einen Bildpunktwert bereitzustellen, der der vorliegenden Bewegung möglichst gut entspricht, ist ein Medianfilter 53 vorgesehen. Das Medianfilter 53 weist im vorliegenden Fall drei Eingangswerte auf, die gemäß der Filterwirkung bekanntlich der Größe nach geordnet werden, wobei der größenmittlere Wert als Ausgangswert ausgegeben wird. Dem Medianfilter 53 werden speziell diejenigen Bildpunkte eingespeist, die der Bildpunktstelle des Bildpunkts 50 im unmittelbar vorhergehenden Ausgangshalbbild B1Oₜ unmittelbar benachbart liegen. Da dieses Halbbild BO1ₜ im Vergleich zum Halbbild A2Oₜ der anderen Rasterlage angehört, liegen diese Bildpunkte in der unmittelbar darüber- bzw. darunterliegenden Zeile. Sie sind mit 54 bzw. 55 bezeichnet. Der dritte Eingangswert des Medianfilters 53 ist von der dem Ausgangsbildpunkt 50 entsprechenden Bildpunktstelle des rastergleichen vorhergehenden Ausgangshalbbilds A1Oₜ entnommen. Diese ist mit 56 bezeichnet. Das nichtlineare Medianfilter hat hier die Wirkung, daß in unbewegten Bildbereichen in der Regel der Abtastwert aus dem Bild mit der gleichen Rasterlage zu seinem Ausgang weitergeleitet wird. Bei Vorliegen von Bewegung wird einer der Werte aus dem Bild der entgegengesetzten Rasterlage ausgewäht und in den Rückkopplungszweig des Rauschfilters eingespeist. Dadurch wird erreicht, daß sich der Ausgangsbildpunkt des Medianfilters möglichst gut an die vorliegende Bewegung in der Halbbildfolge angepaßt ist.

Der Rekursionsparameter kₜ wird bewegungsadaptiv durch einen Bewegungsdetektor 22 (Figur 5) eingestellt. Der Bewegungsdetektor 22 bildet im gezeigten Beispiel in einem ersten Pfad die Differenz der eingangsseitig in das Rauschfilter 16 eingespeisten Bildpunkte, nämlich zwischen Bildpunkten des gerade eingespeisten Halbbilds A2Iₜ und des unmittelbar vorhergehenden Halbbilds der anderen Rasterlage B1Oₜ sowie des mittelbar vorhergehenden Halbbilds der gleichen Rasterlage A1Oₜ. Wie in Figur 5 gezeigt, wird in jedem der Zweige eine Betragsbildung 60a, 60b durchgeführt, anschließend eine örtliche Tiefpaßfilterung 61a bzw. 61b. Anschließend wird in jedem Pfad mittels Einrichtungen 62a, 62b ein örtlicher Maximalwert berechnet, ensprechend der Figur 4. Daraus wird im Abschnitt 63 ein gemeinsamer Maximalwert ermittelt, der der Kennlinienerzeugung 64 zugeführt wird. Zweckmäßigerweise wird im Tiefenkanal eine lineare Kennlinie verwendet. Um die Differenz zwischen den rasterverschiedenen Halbbildern B1Oₜ und A2Iₕ zu bilden, ist eine Uminterpolation 23 vorgesehen (Figur 1), durch die aus den Bildpunkten zweier übereinanderliegender Zeilen der Zwischenbildpunkt, beispielsweise durch lineare Interpolation, berechnet wird. Darüber hinaus enthält die Schaltung nach Figur 1 einen Zeilenspeicher 24, so daß die Bildpunkte 54, 55 zeitgleich zur Verarbeitung im Medianfilter 53 und Interpolationsfilter 23 vorliegen. Darüber hinaus ist im Rückkopplungspfad zur Abtrennung der rückgekoppelten Tiefensignalanteile je ein Tiefpaßfilter 25, 26 vorgesehen, so daß im Rückkopplungspfad zwei rasterverschiedene Halbbilder gleichzeitig vorliegen.

Im Höhen- und Tiefenkanal wird somit die ermittelte Bewegung des jeweiligen Signalanteils in unterschiedlicher Weise berücksichtigt. Im Höhenkanal wird die Bewegung zwischen Bildpunkten ermittelt, die Halbbildern der gleichen Rasterlage zuzuordnen sind. Im Tiefenkanal wird die Bildpunktdifferenz zwischen dem aktuellen Halbbild und den beiden vorhergehenden (ausgangsseitigen) Halbbildern unterschiedlicher Rasterlage ermittelt. Die Halbbilder, auf denen die Bewegungsdetektion angewandt wird, entsprechen den Halbbildern, die dem rekursiven Rauschreduktionsfilter zugeführt werden.

Zusammenfassend wird beim erfindungsgemäßen Verfahren die Rauschreduktion im Höhen- und Tiefenkanal jeweils derart durchgeführt, daß sie an die subjektiven Wahrnehmungseigenschaften des menschlichen Auges angepaßt ist. Im Höhenkanal wird eine rastergleiche Rekursion durchgeführt, wobei auch bei Vorliegen geringer Bewegung die Rauschreduktion überproportional verringert wird. Dies berücksichtigt die geringere Rauschempfindlichkeit des Auges im Höhenkanal. Im Tiefenkanal weist das Auge eine höhere Empfindlichkeit für niederfrequentes Rauschen auf. Die Rauschverringerung wird deshalb linear mit der vorliegenden Bewegung gesteuert. Durch das Medianfilter wird eine Bewegungsverschleifung im Tiefenkanal, die besonders störend wahrgenommen werden würde, vermieden.

## Patentansprüche

1. Verfahren zur Rauschreduktion eines Videosignals, mit den Schritten:
a) Auftrennen des Videosignals (QI) in einen Höhensignalanteil und einen Tiefensignalanteil aufgetrennt wird, wobei das Videosignal (QI) Halbbilder mit einer ersten (A1, A2) und einer zweiten (B1, B2) Rasterlage umfasst;
b) Anwenden einer Rauschreduktion auf die Signalanteile, wobei
b1) der rekursiven Rauschreduktion für den Höhensignalanteil (A1Iₕ, B1Iₕ, A2Iₕ, B2Iₕ) Eingangswerte von Bildpunkten (34, 33) des Höhensignalanteils zugeführt werden, die im wesentlichen jeweils der gleichen Rasterlage angehören, und
b2) der rekursiven Rauschreduktion für den Tiefensignalanteil (A1Iₜ, B1Iₜ, A2Iₜ, B2Iₜ) Eingangswerte zugeführt werden, von der mindestens ein Teil mittels einer im wesentlichen bewegungserhaltenden Filterung (53) von Bildpunkten (54, 55, 56) des Tiefensignalanteils abgeleitet wird; und
c) Zusammenfassen der rauschreduzierten Signalanteile,
**dadurch gekennzeichnet, daß**
d) auf die Signalanteile je eine unterschiedliche rekursive Rauschreduktion (15, 16) angewandt wird, wobei
e) die Rauschreduktion für den Höhensignalanteil und den Tiefensignalanteil jeweils von einem Reduktionsparameter (kₕ, kₜ) abhängig steuerbar ist,
e1) der jeweilige Reduktionsparameter von der im jeweiligen Signalanteil feststellbaren Bewegung abhängig steuerbar ist; und
e2) der Reduktionsparameter (kₜ) für den Tiefensignalanteil überproportional von einem festgestellten Bewegungsmaß abhängig gesteuert wird.

2. Verfahren nach Anspruch 1,
**dadurch gekennzeichnet, daß**
die im wesentlichen bewegungserhaltende Filterung (53) eine nichtlineare Filterung, insbesondere eine Medianfilterung ist, die auf Bildpunkte von rauschreduzierten Halbbildern (A1Oₜ, B1Oₜ) des Tiefensignalanteils angewandt wird, daß die rauschreduzierten Halbbilder (A1Oₜ, B1Oₜ) des Tiefensignalanteils Halbbilder mit der ersten und der zweiten Rasterlage enthalten, daß die Eingangswerte der Filterung von Bildpunkten (56) der Halbbilder der ersten Rasterlage (A1Oₜ) und von Bildpunkten (54, 55) der Halbbilder der zweiten Rasterlage (B1Oₜ) abgeleitet werden.

3. Verfahren nach einem der Ansprüche 1 oder 2,
**dadurch gekennzeichnet, daß**
die Rauschreduktion (15, 16) von im jeweiligen Signalanteil festgestellter Bewegung für den Höhen- und den Tiefensignalanteil unterschiedlich abhängig gesteuert wird.

4. Schaltungsanordnung zur Durchführung des Verfahrens nach einem der Ansprüche 1 bis 3, umfassend:
a) ein Trennungsfiltermittel (11, 13), dem eingangsseitig das Videosignal (QI) zuführbar ist und das einen ersten Ausgang für den Höhensignalanteil und einen zweiten Ausgang für den Tiefensignalanteil aufweist;
b) ein erstes rekursives Rauschfilter (15), das eingangsseitig mit dem ersten Ausgang des Trennungsfiltermittels (11, 13) verbunden ist, so daß dem ersten rekursiven Filter (15) im wesentlichen zur gleichen Rasterlage zuordenbare Bildpunkte zuführbar sind;
c) ein zweites rekursives Rauschfilter (16), das eingangsseitig mit dem zweiten Ausgang des Trennungsfiltermittels (11, 13) über ein Filter (53), das im wesentlichen eine bewegungserhaltende Filterung durchführt, verbunden ist; und
d) ein Addiermittel (27) zur ausgangsseitigen Verknüpfung der Rauschfilter (15, 16), das seinerseits ausgangsseitig über ein weiteres Trennungsfiltermittel (19, 25, 26) jeweils auf das erste und das zweite Rauschfiltermittel (15, 16) rückgekoppelt ist,
**dadurch gekennzeichnet, daß**
die Schaltungsanordnung weiter aufweist:
e) jeweils einen Bewegungsdetektor (18, 22) für den Höhenund den Tiefensignalanteil, wobei die Bewegungsdetektoren jeweils eingangsseitig mit den entsprechenden Ausgängen der Trennungsfiltermittel (11, 13, 19, 25, 26) gekoppelt sind und ausgangsseitig zur für den Höhen- und Tiefensignalanteil unterschiedlichen Steuerung von jeweiligen Reduktionsfaktoren (kₕ, kₜ) mit den rekursiven Rauschfiltern (15, 16) verbunden sind.

5. Schaltungsanordnung nach Anspruch 4,
**dadurch gekennzeichnet, daß**
im Rückkopplungssignalpfad ein erster und ein zweiter Halbbildspeicher (20, 21) vorgesehen sind, daß dem Rauschfilter (16) und dem Bewegungsdetektor (22) für den Tiefensignalanteil die Bildpunkte der Halbbilder um eine und um eine weitere Halbbildperiode verzögert zuführbar sind und daß dem dem Rauschfilter (15) und dem Bewegungsdetektor (18) für den Höhensignalanteil die Bildpunkte der Halbbilder um zwei Halbbildperioden verzögert zuführbar sind.

6. Schaltungsanordnung nach Anspruch 5,
**dadurch gekennzeichnet, daß**
dem Rauschfilter (16) für den Tiefensignalanteil eingangsseitig ein Medianfilter (53) vorgeschaltet ist, dem Bildpunkte (54, 55, 56) zuführbar sind, die in bezug auf den durch das Rauschfilter (16) zu erzeugenden Bildpunkt (50) im unmittelbar vorhergehenden Halbbild (B1Oₜ) benachbart liegen und im mittelbar vorhergenden Halbbild (A1Oₜ) an derselben Stelle liegen.

## Claims

1. Method for noise reduction of a video signal, having the following steps:
a) separation of the video signal (QI) is separated into a high-frequency signal component and a low-signal signal component, the video signal (QI) comprising fields having a first (A1, A2) and a second (B1, B2) raster position;
b) application of a noise reduction to the signal components,
b1) the recursive noise reduction for the high-frequency signal component (A1Iₕ, B1Iₕ, A2Iₕ, B2Iₕ) being fed input values of pixels (34, 33) of the high-frequency signal component which are essentially in each case associated with the same raster position; and
b2) the recursive noise reduction for the low-frequency signal component (A1Iₜ, B1Iₜ, A2Iₜ, B2Iₜ) being fed input values, at least some of which are derived from pixels (54, 55, 56) of the low-frequency signal component by means of an essentially motion-maintaining filtering (53); and
c) combination of the noise-reduced signal components,
**characterized in that**
d) a different recursive noise reduction (15, 16) is in each case applied to the signal components,
e) the noise reduction for the high-frequency signal component and the low-frequency signal component in each case being controllable in a manner dependent on a reduction parameter (kₕ, kₜ);
e1) the respective reduction parameter being controllable in a manner dependent on the motion that can be detected in the respective signal component; and
e2) the reduction parameter (kₜ) for the low-frequency signal component being controlled more than proportionally in a manner dependent on a detected extent of motion.

2. Method according to Claim 1,
**characterized in that**
the essentially motion-maintaining filtering (53) is a non-linear filtering, in particular a median filtering, which is applied to pixels of noise-reduced fields (A1Oₜ, B1Oₜ) of the low-frequency signal component, **in that** the noise-reduced fields (A1Oₜ, B1Oₜ) of the low-frequency signal component contain fields having the first and the second raster position, **in that** the input values of the filtering are derived from pixels (56) of the fields of the first raster position (A1Oₜ) and from pixels (54, 55) of the fields of the second raster position (B1Oₜ).

3. Method according to either of Claims 1 or 2,
**characterized in that**
the noise reduction (15, 16) is controlled differently in a manner dependent on motion detected in the respective signal component for the high-frequency and the low-frequency signal component.

4. Circuit arrangement for carrying out the method according to one of Claims 1 to 3, comprising:
a) a separation filter means (11, 13) to which the video signal (QI) can be fed on the input side and which has a first output for the high-frequency signal component and a second output for the low-frequency signal component;
b) a first recursive noise filter (15), which, on the input side, is connected to the first output of the separation filter means (11, 13), so that pixels that can be assigned essentially to the same raster position can be fed to the first recursive filter (15);
c) a second recursive noise filter (16) which, on the input side, is connected to the second output of the separation filter means (11, 13) via a filter (53) that essentially carries out a motion-maintaining filtering; and
d) an addition means (27) for combining the noise filters (15, 16) on the output side, which addition means for its part, on the output side, exhibits feedback via a further separation filter means (19, 25, 26) in each case to the first and second noise filter means (15, 16),
**characterized in that**
the circuit arrangement furthermore has:
e) in each case a motion detector (18, 22) for the high-frequency and low-frequency signal components, the motion detectors in each case being coupled on the input side to the corresponding outputs of the separation filter means (11, 13, 19, 25, 26) and being connected on the output side to the recursive noise filters (15, 16) for the control of respective reduction factors (kₕ, kₜ) that differs for the high-frequency and low-frequency signal components.

5. Circuit arrangement according to Claim 4,
**characterized in that**
a first and a second field memory (20, 21) are provided in the feedback signal path, **in that** the pixels of the fields can be fed to the noise filter (16) and the motion detector (22) for the low-frequency signal component in a manner delayed by one and by a further field period, and **in that** the pixels of the fields can be fed to the noise filter (15) and to the motion detector (18) for the high-frequency signal component in a manner delayed by two field periods.

6. Circuit arrangement according to Claim 5,
**characterized in that**
a median filter (3) is connected upstream of the noise filter (16) for the low-frequency signal component on the input side, which median filter can be fed pixels (54, 55, 56) which, with respect to the pixel (50) to be generated by the noise filter (16), lie adjacent in the directly preceding field (B1Oₜ) and lie at the same location in the indirectly preceding field (A1Oₜ).

## Revendications

1. Procédé de réduction du bruit d'un signal vidéo, lequel comprend les étapes suivantes :
a) décomposition du signal vidéo (QI) en un signal partiel vertical et un signal partiel longitudinal, le signal vidéo (QI) comprenant des trames comportant une première (A1, A2) et une seconde (B1, B2) couche de demi-entrelaçage ;
b) application d'une réduction de bruit aux signaux partiels, étape dans le cadre de laquelle
b1) des valeurs d'entrée relatives à des éléments d'image (34, 33) du signal partiel vertical qui appartiennent chaque fois sensiblement à la même couche de demi-entrelaçage sont amenées à la réduction de bruit récursive pour le signal partiel vertical (A1Iₕ, B1Iₕ, A2Iₕ, B2Iₕ) ; et
b2) des valeurs d'entrée, dont au moins une partie sont dérivées d'éléments d'image (54, 55, 56) du signal partiel longitudinal au moyen d'un filtrage maintenant sensiblement le mouvement (53), sont amenées à la réduction de bruit récursive pour le signal partiel longitudinal (A1Iₜ, B1Iₜ, A2Iₜ, B2Iₜ) ; et
c) réunion des signaux partiels à bruit réduit ;
**caractérisé en ce que**
d) on applique une réduction de bruit récursive (15, 16) différente selon les signaux partiels, auquel cas :
e) la réduction de bruit pour le signal partiel vertical et la réduction de bruit pour le signal partiel longitudinal peuvent chacune être commandées en fonction d'un paramètre de réduction (kₕ, kₜ) ;
e1) chacun des paramètres de réduction peut être commandé en fonction du mouvement identifiable dans le signal partiel concerné ; et
e2) le paramètre de réduction (kₜ) pour le signal partiel longitudinal est commandé d'une manière surproportionnelle en fonction d'une mesure de mouvement constatée.

2. Procédé selon la revendication 1,
**caractérisé en ce que** le filtrage (53) maintenant sensiblement le mouvement est un filtrage non linéaire, notamment un filtrage médian qui est appliqué à des éléments d'image faisant partie de trames à bruit réduit (A1Oₜ, B1Oₜ) du signal partiel longitudinal, **en ce que** les trames à bruit réduit (A1Oₜ, B1Oₜ) du signal partiel longitudinal contiennent des trames comprenant la première et la seconde couche de demi-entrelaçage, **en ce que** les valeurs d'entrée sont dérivées du filtrage d'éléments d'image (56) faisant partie des trames de la première couche de demi-entrelaçage (A1Oₜ) et d'éléments d'image (54, 55) faisant partie des trames de la seconde couche de demi-entrelaçage (B1Oₜ).

3. Procédé selon l'une des revendications 1 ou 2,
**caractérisé en ce que** la réduction de bruit (15, 16) est commandée, en fonction du mouvement constaté dans le signal partiel concerné, différemment pour le signal partiel vertical et pour le signal partiel longitudinal.

4. Circuit servant à la mise en oeuvre du procédé selon l'une des revendications 1 à 3, lequel comprend :
a) un moyen formant filtre de voie (11, 13) auquel le signal vidéo (QI) peut être amené côté entrée et qui comporte une première sortie pour le signal partiel vertical et une deuxième sortie pour le signal partiel longitudinal ;
b) un premier filtre à bruit récursif (15) qui est relié, côté entrée, à la première sortie du moyen formant filtre de voie (11, 13) de sorte que des éléments d'image associés sensiblement à la même couche de demi-entrelaçage puissent être amenés au premier filtre récursif (15) ;
c) un deuxième filtre à bruit récursif (16) qui est relié, côté entrée, à la deuxième sortie du moyen formant filtre de voie (11, 13), et ce, par l'intermédiaire d'un filtre (53) qui effectue sensiblement un filtrage maintenant le mouvement ; et
d) un moyen additionneur (27) qui sert à effectuer, côté sortie, un chaînage des filtres à bruit (15, 16) et qui, pour sa part, est rétroactivement couplé, côté sortie, sur chacun des premier et deuxième moyens de filtrage à bruit (15, 16) par l'intermédiaire d'un autre moyen formant filtre de voie (19, 25, 26),
**caractérisé en ce que** le circuit comporte en outre :
e) des détecteurs de mouvement (18, 22) respectivement pour le signal partiel vertical et pour le signal partiel longitudinal, chacun des détecteurs de mouvement étant couplé, côté entrée, aux sorties correspondantes des moyens formant filtre de voie (11, 13, 19, 25, 26) et étant relié, côté sortie, aux filtres à bruit récursifs (15, 16) pour commander, différemment selon qu'il s'agit du signal partiel vertical ou du signal partiel longitudinal, les facteurs de réduction respectifs (kₕ, kₜ).

5. Circuit selon la revendication 4,
**caractérisé en ce qu'**il est prévu, dans le chemin de signal de rétroaction, une première et une deuxième mémoire de trame (20, 21), **en ce que** les éléments d'image des trames peuvent être amenés au filtre à bruit (16) et au détecteur de mouvement (22) réservés au signal partiel longitudinal en étant retardés d'une période de trame et d'une période de trame supplémentaire, et **en ce que** les éléments d'image des trames peuvent être amenés au filtre à bruit (15) et au détecteur de mouvement (18) réservés au signal partiel vertical en étant retardés de deux périodes de trame.

6. Circuit selon la revendication 5,
**caractérisé en ce qu'**il y a, en amont du filtre à bruit (16) pour le signal partiel longitudinal, côté entrée, un filtre médian (53) auquel il est possible d'amener des éléments d'image (54, 55, 56) qui, par rapport à l'élément d'image (50) que le filtre à bruit (16) doit produire, sont voisins dans la trame (B1Oₜ) directement précédente et sont au même endroit dans la trame (A1Oₜ) indirectement précédente.
